# EUROPEAN PATENT APPLICATION

(11) **EP 0 943 670 A1**
(43) Date of publication of application: **22.09.1999**
(21) Application number: 99103946.2
(22) Date of filing: 08.03.1999
(51) Int. Cl.: C09J 4/00

(54) **Process for making anaerobic curing adhesive composition**

(30) Priority: 16.03.1998 US 39796
(71) Applicant: National Starch and Chemical Investment Holding Corporation, Wilmington, Delaware 19803-7663 (US)
(72) Inventor: Catena, William, Parsippany, New Jersey 07054 (US)
(74) Representative: Held, Stephan, Dr.rer.nat., Dipl.-Chem.

(57) **Abstract**

A process for making anaerobic curing adhesive composition comprises (a) providing a homogeneous mixture of polymerizable acrylate and/or methacrylate monomers, a cyclic sulfimide, a chelating agent, and one or more quinones having a normal potential in the range of 0.25 to 0.45 volts, preferably, 0.3 to 0.4 volts, in an amount of about .01 to .02% by weight of the total composition; (b) heating the mixture of acrylates and/or methacrylates, chelating agent, and quinone to temperatures in the range of 45°-100°C for a period of time effective to chelate any metal ions in the mixture; (c) adding an aromatic tertiary amine to the chelated mixture; (d) heating the mixture containing the acrylates and/or methacrylates, cyclic sulfimide, quinone, and aromatic tertiary amine to temperatures in the range of 45°C-100°C, preferably at about 67°C, with sufficient agitation to introduce air into the mixture for a period of time in the range of one to four hours.

## Description

This invention relates to a method of preparing anaerobic-curing adhesive and sealant compositions containing polymerizable acrylate ester monomers.

In US patent 4,235,986, a method was disclosed for preparing storage-stable anaerobic adhesive compositions that did not require the addition of peroxy initiators. In this method, the monomers to be polymerized and an organic cyclic sulfimide are first subjected to chelation. After chelation, a tertiary amine is added and air is vigorously stirred into the mixture as the mixture is heated to a temperature in the range of 45°-100°C. During the course of this reaction, an active and stable anaerobic adhesive is formed. This method takes up to 12 hours of processing time to form the adhesive composition. If the processing time is shortened, the activity and the stability of the adhesive are inferior.

This invention is an improvement over the method claimed in US patent 4,235,986. It has now been discovered that when specific quinones are added as polymerization inhibitors to the manufacturing method described in that patent, the processing time for forming the anaerobic system can be unexpectedly and dramatically reduced to a time within the range of one to four hours, and active and stable adhesives can be obtained. The effective quinones are those having a normal potential in the range of 0.25 to 0.45, preferably 0.3 to 0.4, volts.

The anaerobic adhesive compositions prepared by the improved method are based on polymerizable methacrylates and acrylates and an accelerator system consisting of an aromatic tertiary amine and an organic cyclic sulfimide.

Thus, this invention is a process for making the anaerobic curing adhesive composition comprising the sequential steps of: (a) providing a homogeneous mixture of polymerizable acrylate or methacrylate monomers, or both, a cyclic sulfimide, a chelating agent, and one or more quinones having a normal potential in the range of 0.25 to 0.45 volts, preferably 0.3 to 0.4 volts, (b) heating the mixture to a temperature in the range of 45°-100°C for a period of time effective to chelate any metal ions in the mixture; (c) adding an aromatic tertiary amine to the chelated mixture; (d) heating the mixture to a temperature in the range of 45°C-100°C, preferably at about 67°C, with sufficient agitation to introduce air into the mixture for a period of time in the range of one to four hours.

In the initial step in the process, the monomers to be polymerized, the quinone, the cyclic sulfimide, and the chelating agent (for cheating any trace metal ions that may be present in these materials) are mixed together by stirring and heated to a temperature in the range of 45°-100°C for a period of time effective to make the mixture homogeneous. Typically, this will take about one hour, although for some mixtures up to three hours may be needed.

The preferred chelating agents are α- and β-aminocarboxylates, e.g., tetrasodium ethylenediaminetetraacetic acid (Na₄ETDA) or diammonium ethylenediaminetetraacetic acid (NH₄)₂EDTA, and will be present in an amount from about 0.005% to about 0.2% by weight of the total composition, preferably from 0.01 to 0.1% by weight.

The quinones are those having a normal potential of 0.25 to 0.45, and preferably 0.3 to 0.4, volts. A treatise on the normal potential of quinones may be found in Fieser & Fieser, "Organic Chemistry", 2^{nd} Edition, 1950, D.C. Heath & Co. New York, page 752 et seq. It is only within this normal potential range that the combination of activity and stability are obtained. Suitable quinones are 2-methoxy-1,4-naphthoquinone and 2-hydroxy-1,4-naphthoquinone. The Examples show that the balance of stability and activity is not obtained by quinones having higher or lower potentials. Quinones that do not meet the requirement for the normal potential range are, for example, α-naphthoquinone, β-naphthoquinone, p-benzoquinone, o-benzoquinone, diphenoquinone, and anthraquinone.

After chelation is complete, the aromatic tertiary amine is added to the mixture. The mixture is stirred vigorously so as to introduce air into the mixture while it is simultaneously heated to a temperature within the range of 45°-100°C, preferably at 67°C, for a period of time effective to provide a stable and an active anaerobic curing adhesive. That time is about one to four hours.

Suitable aromatic tertiary amines are the N,N-dialkylaryl amines and N,N-dialkyl substituted aryl amines of the general formula: 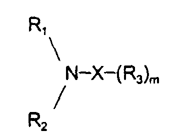 in which X represents a carbocyclic aromatic nucleus selected from the group consisting of phenyl and naphthyl radicals; R₁ and R₂ are lower alkyl radicals of 1 to 4 carbon atoms, inclusive; R₃ is selected from the group consisting of lower alkyl and lower alkoxy radicals of 1 to 4 carbon atoms, and m is an integer of 0 to 7. Exemplary amines include N,N-dimethylaniline, N,N-diethylaniline, p-isopropyl-N,N-dimethylaniline, p-methoxy-N,N-dimethylaniline, N,N-dimethyl-p-toluidine, N,N-dimethyl-o-toluidine, N,N-dimethyl-m-toluidine, N,N-diethyl-p-toluidine, 2,4-,3,4- and 3,5-dimethyl-N,N-dimethylaniline, and the like, as well as mixtures of those. In general, amines with a low degree of volatility and toxicity are preferred, with N,N-dimethyl-p-toluidine being most preferred. Ordinarily, the concentration of tertiary amine ranges from about 0.01 to 3%, by weight of the total composition.

The cyclic sulfimides suitable for use in the inventive process are compounds of the formula: 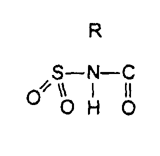 in which R is a divalent aromatic nucleus of 6 carbon atoms that bonds the sulfimide group in a heterocyclic ring or a polynuclear heterocyclic ring. Among the cyclic sulfimides suitable, o-benzoic sulfimide (saccharin) is most preferred. The amount of sulfimide employed will range from about 0.01 to about 12% by weight of the total composition.

There are several classes of acrylates and methacrylates that are useful to make anaerobic adhesive compositions. One class corresponds to the general formula: 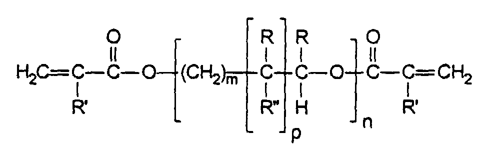 in which
R is selected from the group consisting of H, CH₃, CH₃CH₂―, ―CH₂OH, and 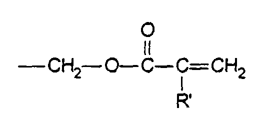
in which R' is selected from the group consisting of Cl, H, CH₃, and CH₃CH₂―, and
R'' is selected from the group consisting of H, -OH, and 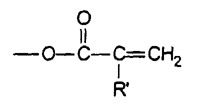
m is an integer of 1 to 8, and preferably from 1 to 4; n is an integer of 1 to 20; and p is an integer of 0 or 1.

Specific monomers falling within the above general formula include, for example, ethyleneglycol dimethacrylate, ethyleneglycol diacrylate, polyethyleneglycol diacrylate, tetraethyleneglycol dimethacrylate, diglycerol diacrylate, diethyleneglycol dimethacrylate, pentaerythritol triacrylate, and other polyester diacrylates and dimethacrylates.

Another class corresponds to the general formula: 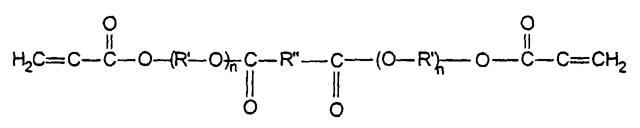 in which
R is selected from the group consisting of H, Cl, CH₃ and CH₃CH₂―;
R' is an alkylene with 2 to 6 carbon atoms;
R'' is selected from the group consisting of
   -(CH₂)ₘ- in which m is an integer of 0 to 8, 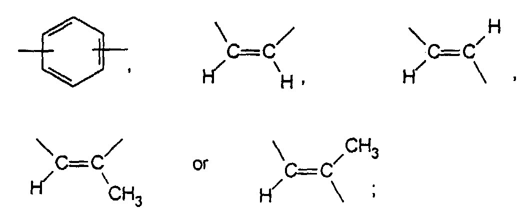
and n represents an integer of 1 to 4.

Typical monomers of this class include, for example, dimethacrylate of bis-(ethyleneglycol) adipate, dimethacrylate of bis-(ethyleneglycol) maleate, dimethacrylate of bis(diethyleneglycol) phthalate, dimethacrylate of bis(tetraethyleneglycol) phthalate, dimethacrylate of bis-(tetraethyleneglycol) malonate, dimethacrylate of bis-(tetraethyleneglycol) sebacate, dimethacrylate of bis-(ethyleneglycol) phthalate, dimethacrylate of bis-(tetraethyleneglycol) maleate, and the diacrylates and α-chloroacrylates corresponding to said dimethacrylates, and the like.

A third class is monomers that are isocyanate-hydroxyacrylate or isocyanate-aminoacrylate reaction products, which may be characterized as acrylate-terminated polyurethanes and polyureides or polyureas. These monomers correspond to the general formula: 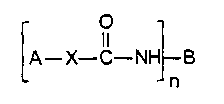
in which X is selected from the group consisting of 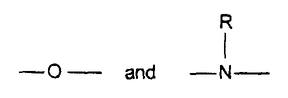
and R is a member selected from the group consisting of hydrogen and lower alkyl radicals of 1 to 7 carbon atoms;
A represents the organic residue of an active-hydrogen-containing acrylate ester in which the active hydrogen has been removed, the ester being hydroxy- or amino-substituted on the alkyl portion, and the methyl, ethyl and chlorine homologs;
n is an integer from 1 to 6 inclusive; and
B is a mono-or polyvalent organic radical selected from the group consisting of alkyl, alkylene, alkenyl, alkenylene, cycloalkyl, cycloalkylene, aryl, arylene, aralkyl, aralkylene, alkaryl, alkarylene, poly(oxyalkylene), poly(carboalkoxyalkylene), and heterocyclic radicals both substituted and unsubstituted.

Typical monomers of this class include the reaction product of a mono- or polyisocyanate, for example, toluene diisocyanate or methylene bis-phenyl diisocyanate, with an acrylate ester containing a hydroxyl or amino group in the non-acrylate portion, for example, hydroxyethyl methacrylate.

Another class corresponds to the acrylate diesters of bisphenol-type compounds. These monomers may be described by the formula: 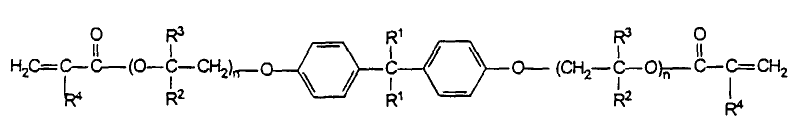 in which R¹ is methyl, ethyl, carboxyl or hydrogen; R² is hydrogen, methyl or ethyl; R³ is hydrogen, methyl or hydroxyl; R⁴ is hydrogen, chlorine, methyl or ethyl; and n is an integer of from 0 to 8.

Representative monomers of this class include dimethacrylate and diacrylate esters of 4,4'-bishydroxy-ethoxy-bisphenol A; dimethacrylate and diacrylate esters of bisphenol A.

Another class consists of monofunctional acrylate and methacrylate esters and the hydroxy-, amido-, cyano-, chloro-, and silane-substituted derivatives of those. Such monomers include, for example, methyl acrylate, methyl methacrylate, ethyl acrylate, ethyl methacrylate, hydroxyethyl methacrylate, hydroxypropyl acrylate, hydroxypropyl methacrylate, butyl acrylate, n-octyl acrylate, 2-ethylhexyl acrylate, decyl methacrylate, dodecyl methacrylate, cyclohexyl methacrylate, t-butyl methacrylate, acrylamide, N-methylolacrylamide, diacetone acrylamide, N-t-butyl acrylamide, N-t-octyl acrylamide, N-butoxyacrylamide, gamma-methacryloxypropyltrimethoxysilane, 2-cyanoethyl acrylate, 3-cyanopropyl acrylate, tetrahydrofurfuryl chloroacrylate, glycidyl acrylate, glycidyl methacrylate, and the like.

The particular monomer employed may be chosen so as to contain an alcoholic or other relatively polar group substituent. Examples of such polar groups, in addition to the hydroxyl group, include amino, amido, cyano, carboxy, mercapto and halogen polar groups. Monomers containing hydroxyl groups and/or labile hydrogen atoms are preferred. Examples of acrylic monomers within this category include hydroxyethyl acrylate, hydroxypropyl acrylate, hydroxyethyl methacrylate, hydroxypropyl methacrylate, diacetone acrylamide, 2-cyanoethyl acrylate, 3-cyanopropyl acrylate, 2-chloroethyl acrylate, glycerol monomethacrylate, 2-hydroxy-3-chloropropyl methacrylate.

It is possible to employ a mixture of acrylate or methacrylate ester monomers or a combination of acrylate and/or methacrylate monomers with other non-acrylic, ethylenically unsaturated copolymerizable comonomers such as unsaturated hydrocarbons, unsaturated esters and ethers, vinyl esters, and the like. Typical optional comonomers include vinyl acetate, methyl vinyl ether, methyl vinyl ketone, poly(ethylene maleate), allyl alcohol, allyl acetate, 1-octene, styrene, etc. Preferably, the total optional non-acrylic monomer(s) will constitute no more than 50% by weight of the monomeric composition, and most preferably no more than 30%.

The cyclic sulfimide, aromatic tertiary amine and chelator that may be employed in this method are generally soluble in the acrylate- and methacrylate-based monomeric systems; therefore, it is usually unnecessary to employ a solvent or diluent in order to produce a satisfactory adhesive composition. If, however, the presence of a solvent or diluent is desired, then any solvent or diluent that dissolves the inhibitor, chelator, sulfimide and tertiary amine, as well as any accelerators present, may be employed. Common solvents are described in the literature and include, for example, alkanols, such as methanol, ethanol and butanol, the substituted or unsubstituted formamides such as formamide and N,N-dimethylformamide, and polyester diluents.

Optionally, the compositions may also contain other additives as are known and used in the art to impart commercially desirable properties. Such additives include polymeric thickeners, plasticizers, dyes, thixotropic agents inert filling materials, and rubbers for enhancing shear and impact strength. Optionally, other free radical initiators can be added.

When air is excluded, such as when the adhesive composition is placed between metal or other impervious surfaces, free-radicals are generated, and the polymerization of the methacrylates and acrylates can occur. Thus, the compositions made by the process of this invention are particularly suitable for use as locking compounds for cementing nuts to threaded shafts, bushings to bush housings, and can be applied either before or after assembly of the components.

### TEST PROCEDURES

The following test procedures were used in the Examples.

Determination of Stability: A total of 250 cc of the adhesive is added to a poly-ethylene container, and placed in an oven at 50°C for ten days, during which the condition of the adhesive is monitored. The time necessary for the composition to undergo gelation or loss of activity is used as an approximate measure of the long term room-temperature stability of the adhesive using the criterion that an adhesive still free from gelling after ten days accelerated aging at 50°C will be stable at ambient temperatures in the presence of air for at least about one year.

Determination of Gel Time as a Measure of Shelf Stability: A total of 5 cc of the sealant is added to a test tube, which is then placed in a bath heated to 82°C for a minimum of 30 minutes. As an approximate correlation with room-temperature stability, 30 minutes of aging in the bath is deemed equivalent to one year of aging at room temperature.

Determination of Torque: The strength of the bond between threaded members is measured both before and after accelerated aging. About two or three drops of adhesive are placed on the exposed threads of 3/8 inch diameter Grade 5 steel bolts having 16 threads per inch, and immediately thereafter a nut with mating threads is run onto the bolt so that the nut is directly in the thread area of the applied adhesive. The adhesive is allowed to set and cure at room temperature for a specified time, 15 minutes, 30 minutes, and 24 hours, and the strength of the bond formed between the nut and bolt is measured. The average prevailing torque for the bond is the average amount of torque required for a wrench to turn a series of three bolts for ¼ turn, ½ turn, ¾ turn and a full turn. Commercially, a bolt adhesive developing an average torque of 11 Newton.meters after 24 hours of cure is considered satisfactory.

Determination of Fingertight Time: Using the above method, each nut and bolt is tested for resistance to turning using finger strength. If the bolt is tight and resists turning within 15 minutes after the adhesive is applied, the adhesive will cure to give adequate commercial strength. This test is a quick and preliminary test for strong adhesion.

The invention is further described, although should not be deemed to be limited, by the following Examples.

### EXAMPLES

Four compositions were prepared from the components in Table 1.

**Table 1**

| Composition Ingredients (Weight per cent) | Samples | | | |
|---|---|---|---|---|
| | A | B | C | D |
| Tetraethyleneglycol dimethacrylate | 70.3 | 70.3 | 70.3 | 70.3 |
| Hydroxyethyl methacrylate | 25.6 | 25.6 | 25.6 | 25.6 |
| Anthraquinone | -- | 0.01 | -- | -- |
| 2-Methoxy-1,4-naphthoquinone | -- | -- | 0.01 | -- |
| α-Naphthoquinone | -- | -- | -- | 0.01 |
| Saccharin | 3.0 | 3.0 | 3.0 | 3.0 |
| EDTA (NH₄)₂ | 0.02 | 0.02 | 0.02 | 0.02 |
| N,N-Dimethyl-p-toluidine | 1.0 | 1.0 | 1.0 | 1.0 |

The structure and the normal potential for the quinones in alcohol are as follows:

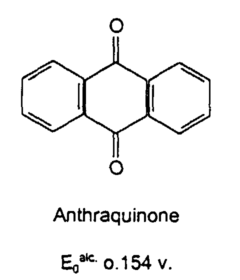

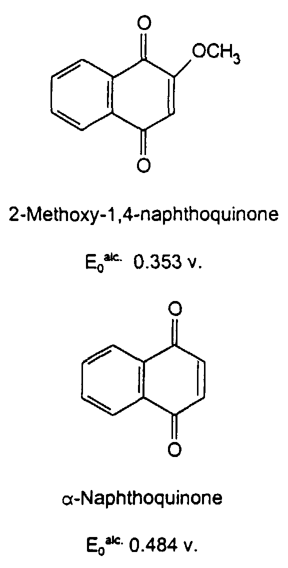

All of the composition ingredients, except for the N,N-dimethyl-p-toluidine, were heated with gentle stirring at 67°C until homogeneous, about one hour. The N,N-dimethyl-p-toluidine was then added and agitation increased to form a vortex to aerate the ingredients for four hours. Each sample was then cooled to room temperature and investigated for activity and stability according to the test procedures described above. The results are reported in Table 2.

**Table 2**

| Test Procedure | Sample | | | |
|---|---|---|---|---|
| | A | B | C | D |
| Gel Time (minutes) | 0-15 | 0-15 | >120 | >120 |
| Fingertight Time (minutes) | 0-15 | 15-30 | 0-15 | 5-10 |
| Torque after 15 minute cure (Nm) | 0.2 | 0.7 | 13.6 | -- |
| Torque after 30 minute cure (Nm) | 35.6 | -- | 23.1 | -- |
| Torque after 24 hour cure (Nm) | 23.7 | 24.5 | 34.8 | 21.9 |
| Stability at 50°C: time to gelation in days | <1 | <1 | >10 | <4 |
| Aged 10 days @ 50°C | -- | -- | >120 | -- |
| Gel time (minutes) | | | | |
| Fingertight Time (minutes) | -- | -- | 0-15 | -- |
| Torque after 30 minute cure (Nm) | -- | -- | 5.2 | -- |
| Torque after 45 minute cure (Nm) | -- | -- | 24.0 | -- |
| Torque after 24 hour cure (Nm) | -- | -- | 28.9 | -- |

The data evidence that Sample C, prepared with the 2-methoxy-1,4-naphthoquinone, demonstrates both activity and stability after only four hours of processing time. In contrast, Sample A, prepared without the quinone, has no shelf-stability. The other samples prepared with quinones with normal potentials outside the desired potential range show instability on aging at 50°C.

## Claims

1. A process for making an anaerobic curing adhesive composition comprising the sequential steps of:
(a) providing a homogeneous mixture of acrylate or methacrylate monomers, or both, a cyclic sulfimide, a chelating agent, and one or more quinones having a normal potential in the range of 0.25 to 0.45 volts, in which the quinones are present in an amount of about .01 to .02% by weight of the total composition;
(b) heating the mixture to a temperature in the range of 45°-100°C for a period of time effective to chelate any metal ions in the mixture;
(c) adding an aromatic tertiary amine to the chelated mixture;
(d) heating the mixture containing the aromatic tertiary amine to a temperature in the range of 45°C-100°C with sufficient agitation to introduce air into the mixture for a period of time in the range of one to four hours.

2. The process according to claim 1 in which the one or more quinones have a normal potential in the range of 0.3 to 0.4 volts.

3. The process according to claim 1 in which the quinone is 2-methoxy-1,4-naphthoquinone or 2-hydroxy-1,4-naphthoquionone.

4. The process according to claim 1 in which the aromatic tertiary amine has the general formula: 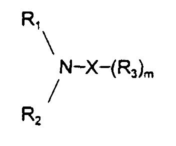 in which
X represents a carbocyclic aromatic nucleus selected from the group consisting of phenyl and naphthyl radicals;
R₁ and R₂ are lower alkyl radicals of 1 to 4 carbon atoms, inclusive;
R₃ is selected from the group consisting of lower alkyl and lower alkoxy radicals of 1 to 4 carbon atoms, and
m is an integer of 0 to 7.

5. The process according to claim 4 in which the tertiary amine is selected from the group consisting of N,N-dimethylaniline, N,N-diethylaniline, p-isopropyl-N,N-dimethylaniline, p-methoxy-N,N-dimethylaniline, N,N-dimethyl-p-toluidine, N,N-dimethyl-o-toluidine, N,N-dimethyl-m-toluidine, N,N-diethyl-p-toluidine, 2,4-, 3,4- and 3,5-dimethyl-N,N-dimethylaniline, and mixtures thereof.

6. The process according to claim 5 in which the tertiary amine is N,N-dimethyl-p-toluidine.

7. The process according to claim 1 in which the cyclic sulfimide is o-benzoic sulfimide.

8. An anaerobic curing adhesive composition made by the process according to claim 1.

9. The anaerobic curing adhesive composition of claim 8 in which the quinone is 2-methoxy-1,4-naphthoquinone or 2-hydroxy-1,4-naphthoquionone.
